Europäisches Patentamt

European Patent Office

Office européen des brevets

(11) Publication number: **0 051 439**
**B1**

(12) **EUROPEAN PATENT SPECIFICATION**

(45) Date of publication of patent specification: **28.05.86**

(21) Application number: **81305093.7**

(22) Date of filing: **28.10.81**

(51) Int. Cl.⁴: **C 25 B 11/12, C 25 B 11/08, C 09 C 1/56, H 01 M 4/96 // C25B1/46**

(54) Method of making active layers for gas diffusion electrodes.

(30) Priority: **31.10.80 US 202576**
**31.10.80 US 202577**

(43) Date of publication of application:
**12.05.82 Bulletin 82/19**

(45) Publication of the grant of the patent:
**28.05.86 Bulletin 86/22**

(84) Designated Contracting States:
**AT BE CH DE FR GB IT LI LU NL SE**

(56) References cited:
**GB-A-2 018 501**
**GB-A-2 024 045**
**US-A-3 943 006**

(73) Proprietor: **ELTECH SYSTEMS CORPORATION**
**Town Executive Center 6100 Glades Road Suite 305**
**Boca Raton Florida 33434 (US)**

(72) Inventor: **Solomon, Frank**
**8 Hampton Court**
**Great Neck New York 11020 (US)**
Inventor: **Grun, Charles**
**71 Irongate Lane**
**Matawan New Jersey 07747 (US)**

(74) Representative: **Cronin, Brian Harold John et al**
**c/o DST SA 3, Route de Troinex**
**CH-1227 Carouge/GE (CH)**

## Description

### Field of the Invention

The present invention is directed to a process of making a gas diffusion electrode active layer particularly well suited for use as an active layer for an oxygen (air) cathode for chlor-alkali cells. The coherent self-sustaining active layer sheet obtained by the process can be employed as the active layer when laminated to a backing (wetproofing) sheet and a current distributor to form an oxygen (air) cathode having high durability and resistance to break down due to the corrosive environment present in a chlor-alkali cell.

### Background of the Invention and Prior Art

Within the field of electrochemistry, there is a well-known type of electrolytic cell known as a chlor-alkali cell. Basically, this is a cell wherein chlorine gas and alkali metal hydroxyde are produced by passing an electric current through a concentrated brine solution containing alkali metal chloride and water. A large portion of the chlorine and caustic for the chemical and plastic industries is produced in chlor-alkali cells.

Such cells are divided by a separator into anode and cathode compartments. The separator characteristically can be a substantially hydraulically impermeable membrane. Alternatively, the separator can be a porous diaphragm, e.g., asbestos, which can be in the form of vacuum deposited fibers or asbestos paper sheet as are well known in the art. The anode can be a valve metal, e.g. titanium, provided with a precious metal coating to yield what is known in the art as a dimensionally stable anode. At the cathodes, both caustic soda and hydrogen are produced. Chlorine is produced at the anodes. The chlor-alkali process is a very energy intensive process.

Fairly recently, attention has been directed in chlor-alkali cell technology to various forms of oxygen (air) cathodes. Such cathodes can result in significant savings in the cost of electrical energy employed to operate chlor-alkali cells. Estimates indicate that there is a theoretical savings of about 25% of the total electrical energy required to operate chlor-alkali cells provided that the formation of molecular hydrogen gas at the cathode can be prevented. In other words, about 25% of the electrical energy employed in a chlor-alkali cell is used to form hydrogen at the cathode. Hence, the prevention of hydrogen formation at the cathode can lead to significant savings in the cost of electrical power. This is one of the major benefits of and purposes for oxygen (air) cathodes. However, such oxygen (air) cathodes, being in contact with the electrolyte caustic soda, are subjected to the corrosive action thereof and so special precautionary measures and techniques have been employed in an attempt to reduce damage and deactivation of the active layer particles contained in the cathodes used in chlor-alkali cells.

One known form of oxygen (air) cathodes involves use of an active cathode layer containing porous active carbon particles whose activity in promoting the formation of hydroxide may or may not be catalyzed using precious metal catalyst materials, such as silver, platinum, etc. The active carbon particles become wetted (flooded) by the caustic thereby significantly reducing their ability to catalyze the formation of hydroxyl groups and eliminate the formation of hydrogen at the cathode resulting in a loss of activity of the air cathode. Some attempts to overcome this difficulty involve incorporation of hydrophobic materials, e.g., polytetrafluoroethylene (PTFE) in such active layers in particulate or fibrillated (greatly attenuated and elongated) form to impart hydrophobicity to the active carbon layer, per se. With the PTFE, however, comes the problem of reduced electrical conductivity in the cathode active layer in as much as PTFE, per se, is nonconductive when compared with the porous active carbon particles. Some oxygen (air) cathodes contain PTFE in both the active layer and in a backing sheet laminated thereto. The PTFE has been employed in particulate or fibrillated form to impart hydrophobicity to the desired layer. Such composite active layers (containing carbon and PTFE), however, are often subjected to loss of strength resulting in failure combined with blistering of the electrode. This is particularly true when operating chlor-alkali cells containing oxygen cathodes with such active layers at high cathode current densities, current densities of from about 250 mA/cm² and higher.

Thus, it can be seen that the development of corrosion-resistant oxygen (air) cathodes of improved durability for use in conjunction with chlor-alkali cells is an overall objective on the oxygen (air) cathode field.

An article entitled "On the Effect of Various Active Carbon Catalysts on the Behavior of Carbon Gas-Diffusion Air Electrodes: 1. Alkaline Solutions" by I. Iliev et al. published in the *Journal of Power Sources*, 1 (1976/1977) describes on pages 35 to 46 a double layer fixed-zone, PTFE-bonded carbon electrodes having a gas supplying layer of carbon black "XC" wetproofed with 35% PTFE and an active layer consisting of a 30 mg/cm² mixture of the same wetproof material "XC-35" and active carbon in a weight ratio of 1:2.5. These electrodes were sintered at 350°C under a pressure of 6.8 10⁵ N/m² and employed as oxygen (air) cathodes in alkaline test environments.

British patent application No. 2 018 501 discloses a method of producing a strip electrode for an air-depolarised electric cell. The electrode comprises a porous polytetrafluoroethylene foil adhered to a strip of catalyst material having active carbon as the main constituent. The foil is adhered to the strip by passage through a gap between a pair of pressure-applying rollers. To ensure that the pores of the foil are not damaged by the rolling operation but are kept open, a highly volatile wetting liquid is applied to the foil by a sponge upstream of the rollers. The liquid quickly evaporates from the foil downstream of the rollers leaving the pores intact (open). A preferred liquid disclosed is a low boiling-point paraffinic hydrocarbon.

British patent application No. 2 024 045 discloses a method of making an electrochemical cell electrode involving depositing a layer of dry carbon/hydrophobic polymer floc powder on the surface of a substrate by dispersing the powder as a cloud in a chamber over the substrate and pulling the powder onto the substrate by drawing a vacuum under the substrate by means of a pump. The electrode is subsequently compacted and sintered. Typically the carbon component of the floc is catalyzed with a catalyst e.g. platinum. The method disclosed is a method for applying a catalyst layer on an electrode substrate.

The US patent No. 3,943,006 discloses a method of making an electrode structure for fuel cells comprising blending of noble metal black particles, particles of dry polytetrafluoroethylene and particles of a soluble bulking agent in a liquid. The electrode bulking agent is insoluble in the liquid. Polytetrafluoroethylene constitutes at least 10% of the combined weight of the noble metal black and polytetrafluoroethylene. After blending the liquid is filtered from the blend to form a filtered mixture. The filtered mixture is then subjected to rolling to form a sheet of fibrillated polytetrafluoroethylene containing noble metal black and bulking agent. Upon rolling the remainder of the blending liquid is removed from the electrode sheet.

Summary of the Invention

The present invention is readily distinguishable from the oxygen (air) cathodes described in the prior art in that according to the method of this invention, as set out in the claims, larger active carbon particles are PTFE treated (discontinuously coated with much smaller PTFE particles) with subsequent fibrillation followed by heat treating and forming into a coherent, self-sustaining sheet without sintering. The active layers when incorporated into an electrode result in an active layer having a desirable combination of tensile strength with resistance to blistering under high current densities in use. It will be observed the conditions employed in formation of the active layer are insufficient to effect sintering of the PTFE contained therein.

The active layer produced according to the method of this invention contains from about 60 to about 85 weight % active carbon (with or without precious metal catalyst), the remainder being unsintered fibrillated polytetrafluoroethylene in intimate admixture with said active carbon.

The active layer produced according to the present invention can be used in laminates which incorporate any backing layer and any current collector. To obtain laminates with desirable characteristics it is however preferred that the PTFE particles are employed in the form of a nonaqueous dispersion, e.g., the Du Pont PTFE 6A series. PTFE 6A consists of coagulates or agglomerates having a particle size of about 500 to 550 micrometers which were made by coagulating (agglomerating) PTFE dispersed particles of about 0.05 to 0.5 micrometer and having an average particle size of about 0.2 micrometer. These agglomerates are dispersed in an organic liquid medium, usually a lower alkyl alcohol, such as isopropanol, and broken down by beating, e.g., in a high speed blender for about three minutes, to redisperse same and break up the larger particles into smaller PTFE particles.

Then pulverized sodium carbonate particles in isopropanol, having particles sizes ranging from about 1 to about 40 micrometers, and more usually from about 5 to 20 micrometers, and preferably having an average particle size of 3 to 4 micrometers, are added to the alcohol dispersion of the blended PTFE particles in a weight ratio ranging from about 30 to about 40 weight parts of PTFE to about 60 to about 70 weight parts of sodium carbonate to result in an intimate dispersion of PTFE with pore former. Then the alcohol is removed and the PTFE-Na$_2$CO$_3$ mix particles are dried.

Subsequent to drying, the particulate PTFE-sodium carbonate mixture is subjected to mixing under conditions which mildly "fiberize" (fibrillate) the PTFE. This fibrillation is performed for approximately 10 to 20, e.g., 15, minutes at 100 rpm and 15° to 25°C, e.g., 20°C.

After fibrillating and before passing the mix between rolls, the fibrillated PTFE-pore former mix is chopped for 1 to 20 seconds, e.g., 5 to 10 seconds.

The mildly "fiberized" chopped mixture of PTFE-sodium carbonate is then dry rolled into sheet form using a single pass through one or more sets of metal, e.g., chrome plated steel rolls. Temperatures of about 70° to about 90°C and roll gaps ranging from about 0.13 to about 0.38 mm are customarily employed. The conditions employed in the dry rolling are such as to avoid sintering of the PTFE particles.

In forming a three-layer laminate gas diffusion electrode for chlor-alkali cells, there is employed as an essential component of the electrode an active layer made by the process of the present invention having catalyzed or uncatalyzed preferably de-ashed active carbon particles discontinuously coated by and in intimate mixture with smaller PTFE particles in a weight ratio of about 15 to 40 weight % of fibrillated PTFE to about 60 to 85 weight % of active carbon. These active layers are preferably made in accordance with the procedure described below.

This procedure involves adding a dilute dispersion containing from about 1 to 10 weight % of polytetrafluoroethylene particles having particle sizes ranging from about 0.05 to 0.5 micrometer to a suspension of larger active carbon particles having particle sizes of from about 1 to 30 micrometers to discontinuously coat same; fibrillating the discontinuously coated particles to form a mix; comminuting, e.g., briefly chopping, the fibrillated mix to yield a granular mix; and forming the granular mix into sheet form, preferably by hot rolling it at temperatures of from about 60° to 90°C. Where it is desired to form ultra thin electrode active layers, the PTFE treated active carbon can be deposited upon a salt (NaCl) bed on a filter paper (as a forming medium), pressed, released from said filter medium and then used as the active layer in an oxygen (air) cathode. Increases in strength and durability are imparted to such active layer structures by fibrilating the PTFE treated active carbon particles before comminuting and rolling.

A variety of active carbons can be used herein. Active carbon is contemplated herein for use both in its unmodified (uncatalyzed) form and as catalyzed or activated with various procedures for deposition of catalytic materials therein or thereon, e.g., precious metals, such as silver, platinum, palladium, spinels, e.g., mixed oxides of nickel and cobalt such as $NiCO_2O_4$; perovskites, e.g., $CaTiO_3$, etc., as described at pages 54, 55 et seq. of *Advanced Inorganic Chemistry*, by F. Albert Cotton and Geoffrey Wilkinson, Third Edition, INTERSCIENCE PUBLISHERS.

Usually said active carbon particles (after conditioning) have a B.E.T. surface area of 1000 $m^2/g$ and higher, combined with an ash content of less than about 4 weight %. This is accomplished by de-ashing said active carbon (before catalyzing it) by separately contacting it with an alkali at elevated temperatures and with an acid. The term "B.E.T." surface area refers to the well-known method of determining surface area according to nitrogen absorption.

The active carbon whose use is contemplated herein encompasses a variety of materials which, in general, prior to de-ashing encompass a variety of amorphous carbonaceous materials generally of vegetable origin which contain inorganic residue, e.g., noncarbonaceous oxides collectively designated as ash.

Preferably, the active carbon starting material is "RB" carbon which is a form of active carbon manufactured by Calgon, a division of Merck, and is made from bituminous coal by known procedures. This material can contain as much as approximately 23% of various oxides and components which can be collectively classified as ash. Typical analysis of the ash contained in RB carbon is as follows:

| Component | Weight Concentration |
| --- | --- |
| Silica | 43.34 |
| Alumina (Al₂O₃) | 29.11 |
| Iron Oxides (Fe₂O₃) | 20.73 |
| Others | 6.82 |

The sequential pretreatment process does not totally remove the ash content from the active carbon but results in a substantial reduction thereof, namely, from about 70 to 80% or more of the ash removed by the de-ashing process.

Prior to contact with the alkali solution, it has been found desirable to first comminute, e.g., ball mill or otherwise divide up the active carbon particles as purchased. For example, RB active carbon was ball milled for 2 to 6 hours, and more usually about 4 hours, to reduce its particle size to from about 1 to 30 micrometers.

The initial stage of treatment constitutes contacting the active particles as obtained, e.g., RB carbon as mentioned above, with either an acid or alkali followed by contact with the other. During the base contacting stages, the alkali material such as sodium hydroxide, potassium hydroxide, etc., is maintained at elevated temperatures ranging from about 90° to about 140°C and several contacting steps are used over time periods of about 0.5 to 24 hours followed by one or more intermittent water washing step(s).

Then the thus treated active carbon is contacted with an acid, such as hydrochloric acid, for similar extended time periods at ambient temperatures. Between the alkali and acid contacting phases, the active carbon particles can optionally be dried. However, drying is not required. Usually the alkali is employed in the form of an aqueous solution containing from 28 to 55, and more usually from 35 to 45 weight % alkali based on total solution. The acid content of the aqueous acid solution customarily ranges from 10 to 30 weight % and more usually from 15 to 25 weight % acid based on total solution.

Similarly the acid washing can be accomplished in several discrete washing steps rather than all at one time. Additionally, the contact with acid can be accomplished at lower temperatures for longer time periods. For example, the acid wash can be conducted overnight (approximately 16 hours) at room temperature. As with the alkali stage, after the acid contact, preferably the active carbon particles are water washed to remove acid and then dried. Alternatively, the acid contact stage can be done at elevated temperatures using a Soxhlet extraction constant reflux apparatus, e.g., using HCl, HBr, etc., at 100° to 130°C, for about 0.5 hour or less. While many acids may be suitable, the acid of choice is hydrochloric acid.

The conditioning results in substantial reduction of the aforementioned ash content of the active carbon particles. Typically when using active carbon having 10 to 23 weight % ash content and an initial B.E.T. surface area of 100 to 1500 $m^2/g$ (before de-ashing), reductions of ash content to from 1.6 to 3.6 weight % and increases in B.E.T. surface area as much as 50% are produced by such de-ashing.

Commercially available ball milled "RB carbon" was found to have an ash content of approximately 12% as received. This "RB carbon" was treated in 38% KOH for 16 hours at 115°C and found to contain 4.6% ash content after a subsequent furnace operation. The alkali-treated "RB carbon" was then treated (immersed) for 16 hours at room temperature in 1:1 aqueous hydrochloric acid (20% concentration). The resulting ash content was reduced to 2.8%.

Alternately, a commercially available (Calgon) active carbon known as "PWA" was first acid washed to an ash content of 4.6% and then treated in 38% KOH for 16 hours at 115°C. The resulting ash content was 1.6%.

The de-ashed particles are then catalyzed by contact with a precursor of a precious metal catalyst. In the event that silver is to be deposited within the pores of the active carbon, it is preferred to soak the carbon in an aqueous solution of silver nitrate followed by removal of excess silver nitrate and chemical reduction with aqueous alkaline formaldehyde.

On the other hand, in the event that it is desired to deposit platinum within the pores of the active carbon material, chloroplatinic acid ($H_2PtCl_6H_2O$) is one preferred precursor. If chloroplatinic acid is used the de-ashed particles are brought in contact with the acid, excess of chloroplatinic acid is removed and the active carbon material treated with alkaline sodium borohydride or formaldehyde as a reducing agent.

The reduction can be accomplished with the use of heat or it can be done at ambient room temperatures. According to another preferred embodiment, the platinum is derived from $H_3Pt(SO_3)_2OH$. After catalysis, the active carbon particles are filtered and vacuum dried in preparation for PTFE treatment.

Fibrillated, active carbon-containing active layers characteristically have thickness of 0.13 to 0.635 millimeters with corresponding tensile strengths ranging from about 7 to 14 kg/cm² as compared to tensile strengths of 3.5 to 5.6 kg/cm² for unfibrillated active layers.

The active carbon particles are formulated into an aqueous suspension with stirring to prepare for gradual addition thereto of a dilute dispersion of PTFE as noted above. Prior to fibrillation, the PTFE-coated active carbon can be blended or mixed with a soluble or volatile particulate pore-forming agent, e.g., sodium carbonate, ammonium benzoate, etc., having a particle size of about 0.1 to 40 micrometers and more usually about 0.5 to 20 micrometers. Preferably a pore-forming agent is used to enhance the permeability of the active layer.

The PTFE and active carbon mixture can be fibrillated as described above in conjunction with backings for approximately 1 to 20 minutes, e.g., 2 to 10 minutes, at from 20 to 120 revolutions per minute at ambient or higher temperature, namely, 15° to 75°C, e.g., 20° to 50°C. After such fibrillating, which compresses and greatly attenuates the particulate PTFE, the mixture is noted to be fibrous.

After fibrillation and before forming the active layer sheets, the fibrillated is chopped or otherwise comminuted for 1 to 60 seconds to yield a granulated mix.

Subsequent to chopping, the fibrillated, PTFE coated active carbon is heated at from 60° to 90°C and usually at temperatures ranging from about 75° to 85°C and passed through about 15 cm diameter chrome-plated steel rolls at roll gaps of 0.13 to 0.6 mm, more usually 0.13 to 0.254 mm. In place of forming the active layer by hot rolling, the active layers can be formed by deposition on a filter medium, as described above. A soluble pore former, if one is previously incorporated into the active layer, can then be removed by washing the thus formed sheet. Alternatively, the removal of the pore former can be deferred until after laminating the active layer to a current distributor and hydrophobic backing.

The coherent, self-sustaining active layer sheets rolled from the fibrillated material characteristically displayed greater tensile strength and in-use durability than sintered unfibrillated sheets. Life testing of the fibrillated active layer sheets of this invention resulted in approximately 6000 hours life at 200+ mA/cm² in 38% aqueous potassium hydroxide before failure by blistering.

The ability to form active layers in sheet form by hot rolling facilitates making the active layer in a continuous manner resulting in an active layer material uniform in thickness and composition by a process which is easy to administer and control.

The preparation of such active layers will be further illustrated in the examples which follow.

Example 1

100 grams of RB active carbon were ball milled for 4 hours in water. This carbon was subsequently treated with 1600 ml or 38% NaOH for an hour at 110° to 120°C with stirring. It was then filtered and washed. This treatment was repeated 3 times, then followed by a room temperature overnight soak in 1:1 HCl and a final washing and drying in air at 110°C.

20 grams of carbon, so prepared, were then platinized in a ratio of 28 parts of carbon to 1 part Pt, using $H_3Pt(SO_3)_2OH$. 20 grams of carbon were suspended in 333 ml of water and 3.57 ml of $H_3Pt(SO_3)_2OH$ (200 g Pt/l) were added and then decomposed to hydrous platinum oxide by the addition of 8.6 ml of 35% $H_2O_2$. After filtering, washing, and air drying at 140°C, the catalyzed carbon was ready for the next step.

20 grams of catalyzed carbon were suspended in 300 ml water with stirring. 8.4 ml of PTFE dispersion were separately diluted in 300 ml of water. The diluted PTFE dispersion was slowly added to the catalyzed carbon suspension. After coagulation, the mixture was washed and dried.

The mix was weighed and was found to be 25 grams. The 25-gram mix was then fibrillated by shear blending, using medium shear cams or blades. The mix was lubricated with 28 cm³ of 30% isopropanol in water and was kneaded for 2.5 minutes at 25 rpm. It was then vacuum dried.

3 grams of mix were chopped 30 seconds a coffee grinder and then rolled at 75°C through 15 cm diameter rolls at a roll separation of 0.18 mm. The rolled sheet was 0.254 mm thick. At this point, the sheet (code E-413) was ready for incorporation into an electrode.

Example 2

Active carbon was prepared as recited in Example 1 up to the point of catalyzing. To catalyze the carbon, 16.7 grams of carbon were suspended in 396 ml $H_2O$ containing 21.3 grams $AgNO_3$ and stirred for 2 hours. The carbon was then filtered to remove all excess liquid and the filter cake was then slurried in a previously prepared solution of 250 ml $H_2O$, 25 ml 30% NaOH, and 18.3 ml of 37% $CH_2O$ and was held at 85°C for 60 minutes with continuous stirring.

The resulting silvered carbon was then washed and dried and processed to sheet material following the steps of Example 1. The resultant sheet material was coded E-305 and its carbon to silver ratio was 5:1.

Example 3

A third sheet material was prepared in exactly the same manner as those described in Examples 1 and 2 with the exception that the catalyzing step was omitted. The code this material was E-421.

Example 4

Electrodes were prepared from each of the above active layer sheets made in accordance with Examples 1, 2 and 3 by laminating a current collector, silver plated 20 × 20 × 0.013 cm nickel wire cloth and a hydrophobic gas diffusion layer containing 65% sodium carbonate and 35% PTFE to each of the active layer sheets with the current distributor being in contact with the working surface of the active layer and the opposite surface in contact with the backing layer.

The lamination is done in a hydraulic press at 1.32 $10^8$ N/m$^2$ and 115°C and is followed by hot soaking in ethylene glycol, as described above, water washing (to remove pore former) and drying.

The test electrodes whose results are described and tabulated below were coded:

        E413 (Pt catalyst — Example 1)
        E305 (Ag catalyst — Example 2)
        E421 (no catalyst — Example 3)

The electrodes were mounted in test cells which were filled with 30% NaOH at 80° ± 5°C. Air flowed across the gas side at 4 times the theoretical requirement for operation of an oxygen cathode. The operating voltage was checked at each current density noted. Voltage was indicated by an Hg-HgO reference electrode which communicated with the test electrode by a Luggin capillary. An inert counter-electrode served as anode of the cell while the electrodes were tested as air depolarized cathodes.

The table below indicates the results obtained.

| Current Density (mA/cm$^2$) | Voltage vs. Hg/HgO Reference (Volts) | | |
| --- | --- | --- | --- |
| | E413 | E305 | E421 |
| 40 | −.09 | −.11 | −.13 |
| 117 | −.14 | −.17 | −.16 |
| 196 | −.17 | −.19 | −.18 |
| 276 | −.20 | −.23 | −.19 |
| 355 | =.24 | −.28 | −.22 |
| 500 | −.39 | −.44 | −.35 |

it will be noted that differences between electrodes are small. Performance of all electrodes cited is considered high.

Example 5

A three-layer laminate was prepared using a conductive carbon black-PTFE hydrophobic layer positioned between a current collector and an active layer. The layers were pressed together at 1.21 $10^8$ N/m$^2$ and 115°C to form a completed electrode.

The hydrophobic backing layer consisted of 70 parts acetylene carbon black and 30 parts PTFE and was rolled to form a sheet whose thickness was 0.3 mm.

The active layer consisted of 64 parts "RB" deashed carbon, 16 parts platinum deposited on said RB carbon, and 20 parts of PTFE and was fibrillated as disclosed hereinabove and formed on a salt (NaCl) bed filter paper. Performance was enhanced by extracting this mix with chloroform in a Soxhlet extractor.

The current collector was a silver plated 20 × 20 × 0.013 cm nickel wire mesh and was positioned on the air side of the electrode.

When tested in a solution of 4 molar NaOH and 2 molar $NaAlO_2$ at 60°C, a voltage of 0.22 volt versus a Hg/HgO reference electrode was observed at a current density of 500 mA/cm$^2$. This was deemed an excellent result and indicated that said laminate would be especially useful as a gas electrode in a battery.

**Claims**

1. A process for forming an active layer or sheet for a laminated gas diffusion electrode the active layer or sheet comprising an intimate mixture of 15 to 40 weight % fibrillated polytetrafluoroethylene and 60 to 85 weight % active carbon particles comprising:

(a) adding a dilute aqueous dispersion of polytetrafluoroethylene particles which are smaller than said active carbon particles to an aqueous suspension of said active carbon particles to discontinuously coat said active carbon particles with the smaller polytetrafluoroethylene particles,

(b) shear blending the discontinuously coated particles to attenuate and fibrillate the polytetrafluoroethylene particles and form an intimate mixture thereof with said active carbon particles,

(c) comminuting said intimate mixture to yield a granular mix, and

(d) forming said granular mix into a sheet without sintering said polytetrafluoroethylene.

2. A process according to claim 1 wherein said granular mix is formed into a sheet by rolling at a temperature in the range from about 60° to about 90°C.

3. A process according to claim 1 wherein said granular mix is formed into a sheet by deposition from a liquid suspension onto a flat filter medium.

4. A process according to claim 1 wherein said active carbon particles have a particle size of about 1 to 30 micrometers.

5. A process according to any of claims 1, 2 or 3 wherein a pore-forming agent is added to said coated active carbon particles prior to said shear blending step.

6. A process according to any preceding claims wherein said intimate mixed is chopped to yield a granular mix.

7. A process according to any preceding claims wherein a precious metal catalyst is deposited on said active carbon particles before said dilute aqueous dispersion of polytetrafluoroethylene particles is added thereto.

8. A process according to claim 7 wherein said precious metal catalyst comprises platinum or silver.

## Patentansprüche

1. Verfahren zur Erzeugung einer aktiven Schicht oder Bahn für eine laminierte Gasdiffusionselektrode, wobei die aktive Schicht oder Bahn ein inniges Gemisch aus 15 bis 40 Gew.% verfasertem Polytetrafluorethylen und 60 bis 85 Gew.% aktive Kohlenstoffteilchen enthält, dadurch gekennzeichnet, daß man

a) eine verdünnte wässrige Dispersion von Polytetrafluorethylenteilchen, welche kleiner als die aktiven Kohlenstoffteilchen sind, zu einer wässrigen Suspension der genannten aktiven Kohlenstoffteilchen zusetzt, um die aktiven Kohlenstoffteilchen mit den kleineren Polytetrafluorethylenteilchen diskontinuierlich zu beschichten,

b) die diskontinuierlich beschichteten Teilchen unter Scherkräften vermischt, um die Polytetrafluorethylenteilchen zu zerkleinern und verfasern und eine innige Mischung derselben mit den aktiven Kohlenstoffteilchen zu bilden,

c) die innige Mischung zerkleinert, um eine granulierte Mischung zu erhalten, und

d) die granulierte Mischung in eine Bahn überführt, ohne die Polytetrafluorethylenteilchen zu sintern.

2. Verfahren gemäß Anspruch 1, bei welchem die granulierte Mischung durch Walzen bei einer Temperatur im Bereich von etwa 60 bis etwa 90°C zu einer Bahn verformt wird.

3. Verfahren gemäß Anspruch 1, bei welchem die granulierte Mischung durch Abscheidung aus einer flüssigen Suspension auf einem ebenen Filtermedium zu einer Bahn verformt wird.

4. Verfahren gemäß Anspruch 1, bei welchem die aktiven Kohlenstoffteilchen eine Teilchengröße von etwa 1 bis 30 µm aufweisen.

5. Verfahren gemäß einem der Ansprüche 1, 2 oder 3, bei welchem zu den beschichteten aktiven Kohlenstoffteilchen vor der Scherbehandlung ein Porenbildner zugesetzt wird.

6. Verfahren gemäß einem der vorangegangenen Ansprüche, bei welchem die innige Mischung zerhackt wird, um eine granulierte Mischung zu erhalten.

7. Verfahren gemäß einem der vorangegangenen Ansprüche, bei welchem ein Edelmetallkatalysator auf den aktiven Kohlenstoffteilchen abgeschieden wird, bevor die verdünnte wässrige Dispersion der Polytetrafluorethylenteilchen zu derselben zugefügt wird.

8. Verfahren gemäß Anspruch 7, bei welchem der Edelmetallkatalysator Platin oder Silber enthält.

## Revendications

1. Procédé pour fabriquer une couche ou feuille active pour une électrode stratifiée à diffusion de gaz, la couche ou feuille active comprenant un mélange intime de 15 à 40 % en poids de polytétrafluoroéthylène réduit à l'état de fibrilles et de 60 à 85 % en poids de particules de charbon actif, caractérisé en ce qu'il consiste à:

a) ajouter une dispersion aqueuse diluée de particules de polytétrafluoroéthylène, qui sont plus petites que lesdites particules de charbon actif, à une suspension aqueuse des particules de charbon actif afin d'enrober les particules de charbon actif de manière discontinue des particules plus petites de polytétrafluoroéthylène;

b) malaxer, dans des conditions de cisaillement, les particules enrobées de manière discontinue afin d'amincir et d'amener à l'état de fibrilles les particules de polytétrafluoroéthylène et de former un mélange intime de ces dernières avec les particules de charbon actif;

c) fragmenter ce mélange intime de manière à obtenir un mélange en grains; et

d) mettre ce mélange en grains sous la forme d'une feuille sans que le polytétrafluoroéthylène soit fritté.

2. Procédé selon la revendication 1, caractérisé en ce que le mélange en grains est mis en forme de feuille en le laminant à une température comprise entre environ 60 et environ 90°C.

3. Procédé selon la revendication 1, caractérisé en ce que le mélange en grains est mis en forme de feuille en formant à partir d'une suspension liquide un dépôt sur un support filtrant plat.

4. Procédé selon la revendication 1, caractérisé en ce que les particules de charbon actif présentent une grosseur de particule d'environ 1 à 30 micromètres.

5. Procédé selon l'une quelconque des revendications 1 à 3, caractérisé en ce qu'un agent porogène est ajouté aux particules de charbon actif enrobées, avant de procéder à l'opération de malaxage à cisaillement.

6. Procédé selon l'une quelconque des revendications précédentes, caractérisé en ce que le mélange intime est haché de façon à obtenir un mélange en grains.

7. Procédé selon l'une quelconque des revendications précédentes, caractérisé en ce qu'un catalyseur formé d'un métal précieux est déposé sur les particules de charbon actif avant que ladite dispersion aqueuse diluée de particules de polytétrafluoroéthylène y soit ajoutée.

8. Procédé selon la revendication 7, caractérisé en ce que le catalyseur formé d'un métal précieux comprend du platine ou de l'argent.